# EUROPEAN PATENT SPECIFICATION

(11) **EP 1 609 035 B1**
(45) Date of publication and mention of the grant of the patent: **20.09.2006**
(21) Application number: 04725682.1
(22) Date of filing: 05.04.2004
(51) Int. Cl.: G05G 1/14

(54) **SELF-LOCKING SHAFT**
SELBSTVERRIEGELNDE WELLE
ARBRE A VERROUILLAGE AUTOMATIQUE

(30) Priority: 03.04.2003 DE 10315234
(43) Date of publication of application: 28.12.2005
(73) Proprietor: FICO CABLES, S.A., 08100 Mollet del Vallès (ES)
(72) Inventor: BARRIOS VILL , Josep, E-08233 Vacarisses (ES); TERRADAS PRAT, Jaume, E-08025 Barcelona (ES); SANCHEZ REVILLA, Eduardo, E-08026 Sabadell (ES); GRAS, David, Alonso, E-08190 Sant Cugat del Vallés (ES); PARDO ALOY, David, E-08193 Bellaterra (ES); JORNET VIDAL, Jordi, E-08224 Terrassa (ES)
(74) Representative: Hess, Peter K. G.
(86) International application number: PCT/EP2004/003597
(87) International publication number: WO 2004/088149

(56) References cited:
- WO-A-94/07040
- DE-A- 19 848 289
- FR-A- 2 796 012
- GB-A- 2 377 376

## Description

### 1. Technical field

The present invention relates to a self-locking shaft for a pivotably or rotatably support of actuation elements in a motor vehicle, particularly of a parking brake or of pedals.

### 2. Prior art

The prior art shows different solutions for the support of pedals or parking brake levers or other moveable elements of a motor vehicle. Usually the moveable element is supported in a mounting, which is fixed with the vehicle, by means of a shaft. This shaft is transversely directed to the direction of motion of the moveable element through the stationary support and the moveable element and the shaft is secured against axial withdrawal.

A very easy possibility for the securing of the shaft lies therein to provide a collar at one end of the shaft, which acts as a stop. At the other side of the shaft threads can be provided, onto which a nut is screwed. Very common is also the possibility to provide a radial groove at this end, in which after the insertion of the shaft a circlip ring (a so-called Seeger circlip ring) is inserted.

A further possibility to secure such a shaft lies therein, to provide a tube-like metal shaft, which comprises at one side a collar and which is mechanically flared at the other side.

The above mentioned possibilities for the securing of a shaft comprise different drawbacks. First, if necessary additional elements as for example a circlip or a nut are required, to secure the shaft. These additional elements must be mounted after the insertion of the shaft, which requires an additional production step. Further, the shaft with a collar and a circlip or a nut must be accessible from both sides during the assembly of the shaft. A press with an arbor or the like is needed for flaring of a tube shaped shaft and for the assembly of a circlip a circlip pliers is needed if applicable.

From the DE 195 31 733 A1 a vehicle control pedal is known wherein a pedal lever is mounted within a U-shaped mounting by means of a slide hub which is interlocked with a bearing sleeve. The bearing sleeve is a separate part, which has to be arranged between the walls of the mounting.

Another possibility for mounting a lever, particularly a pedal lever, is shown in the DE 41 12 133 A1. Therein a lever is mounted within a support by means of a shaft with eccentric end portions, which cooperate with Ω-shaped recesses in the support. In this embodiment the shaft is radially inserted into the support and not axially.

Document FR 2 796 012 shows a self-locking shaft according to the preamble of claim 1.

Therefore, from the prior art it is the technical problem underlying the present invention to provide a shaft, which does not require additional securing or bearing elements and which is however effectively secured against disassembly. The shaft should be mountable without tools and require accessibility just from one side of the support. Further it is desirable, that the shaft is cost efficiently producible.

### 3. Summary of the invention

The present invention solves this problem according to the invention by a self-locking shaft according patent claim 1, by a structure according to patent claim 6 and by a method for the assembly of the structure according to patent claim 11.

Particularly, this problem is solved by a self-locking shaft, which comprises a shaft portion and a head portion for the mounting of the shaft at a support, wherein the head portion comprises resilient clips, which latch with the support during a rotational mounting motion of the shaft with respect to the support. Thereby, the shaft can be mounted within the support by a simple axial insertion into the support and by a latching during a rotational mounting motion of the shaft with respect to the support. Additional securing means are not required. Further, only a one sided accessibility must be given. The shaft is inserted from one side into the support and is also latched from this side. All mounting functions are integrated in the head portion, so the cylindrical shaft portion can be provided as needed for the support function of the shaft. This support function is not negatively influenced by the mounting requirements of the shaft.

In a preferred embodiment the clips are provided as resilient straps which radially extend from a cup-shaped portion to the outside. Thereby, the clips form a radial and also an axial latching face, which securely latches with a correspondingly formed recess in the support.

Further preferred, the clips are connected to the cup-shaped portion at one side of the clips only and the connection line is axially oriented with respect to the shaft. Preferably, the clips comprise a rectangular shape and an axially curved radial top surface. In this configuration the resilient biasing of the clips to the outside provide a particular save latching of the clips with the recess in the support. Due to the comparable large axial latching face and the axially oriented connection line of the clips such a latching is superior to the latching of ordinary hook-like projections or the like.

Preferably, the shaft comprises a pin, which is connected to the head portion in axial direction and which secures the shaft after the assembly from undesired rotation. The pin further acts for a simplified assembly, since in combination with an elongated hole within the support it defines the assembly position and also the latching position of the shaft.

Further this shaft preferably comprises a handle area at the head portion for manual assembly of the shaft in the support without tools. After the insertion into the support the shaft can easily be rotated at this handle area to latch the shaft.

In a further preferred embodiment the shaft and all its components are integrally injection molded from a plastic material. So, it comprises only of a single plastic piece and it is easily and cost efficiently producible and comprises a low weight.

According to the invention, the above problems are also solved by a structure comprising a support fixedly latched with a self-locking shaft, comprising an essentially cylindrical socket, which is integrated within the support, and at least one latching window, for receiving a clip during the latching of the shaft with the support by a rotation, wherein the latching window is radially introduced into the cylindrical wall of the socket. Since the support comprises an essentially cylindrical socket and a latching window radially introduced into the cylindrical wall of the socket a shaft can safely be latched by an insertion operation followed by a rotation.

Preferably the support further comprises a pin guidance, which is provided as a curved elongated hole. Within this pin guidance the pin is guided and it also determines the assembly position as well as the latching position of the shaft.

In a further preferred embodiment the socket within the support comprises at least one axially curved recess, for receiving a clip during the insertion of the shaft into the support.

According to the invention a pedal system preferably for automotive engineering is claimed, comprising a structure according to one of the above described embodiments.

According to the invention further a parking brake lever system, preferably for automotive engineering is claimed comprising a structure according to one of the above described embodiments.

Further, a method for the assembly of a structure according to one of the above described embodiments is claimed, which comprises the following steps in the following order:
1. Inserting of the shaft in axial direction into a corresponding socket within a support; and
2. rotating of the shaft around its rotational axis, until clips, which extend radially from the shaft snap into a latching window within the socket.

Preferably the rotation of the shaft is done at an angle of less or equal of 180°. Particularly preferred the rotation of the shaft is done at an angle of less or equal 90°.

### 4. Short description of the drawing

In the following a preferred embodiment of the present invention is described with respect to the drawings. Therein shows:
- Fig. 1:: A preferred embodiment of a shaft according to the invention in a three-dimensional view;
- Fig. 2:: The head portion of the shaft from Fig. 1 in a further three-dimensional view;
- Fig. 3:: A part of a support respectively a housing for receiving a shaft according to Fig. 1 in a three-dimensional view;
- Fig. 4a:: A partial sectional view of a support with an inserted shaft according to Fig. 1 in an unlatched condition; and
- Fig. 4b:: The view from Fig. 4a, wherein the shaft is in a latched condition.

### 5. Detailed description of the preferred embodiment

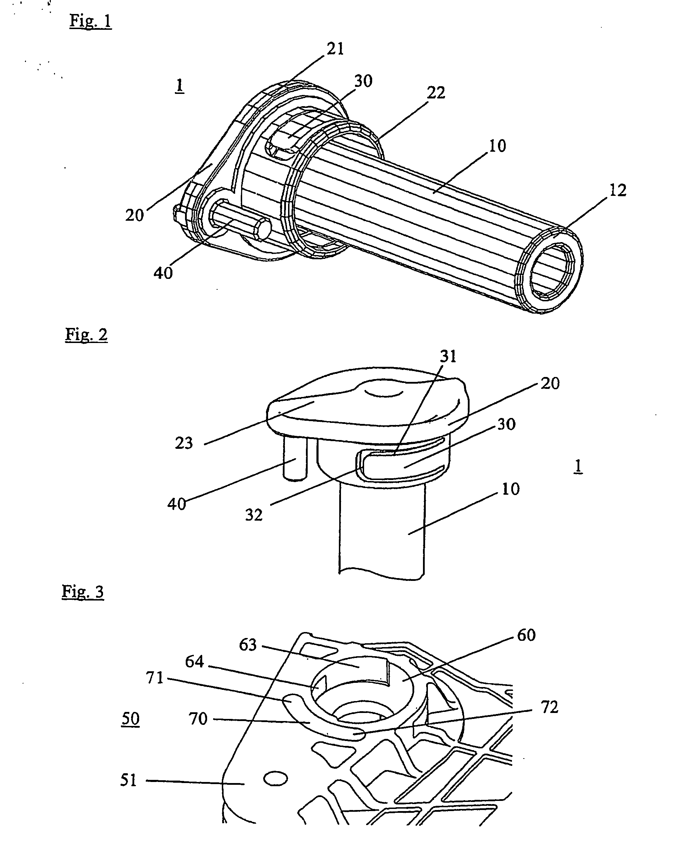

A preferred embodiment of a self-locking shaft is shown in Fig. 1. The shaft 1 comprises an essentially cylindrical shaft portion 10, which performs the actual support function of the shaft. The shaft portion 10 can also be conical or comprise different sections of different diameters or the like, depending on the element to be supported. A head portion 20 is integrally connected with this shaft portion 10.

The head portion 20 acts on the one hand as stop and on the other hand for the securing of the shaft against undesired demounting. The head portion 20 comprises of a cup-shaped portion 22 which is coaxially aligned with the shaft portion 10 and from which two clips 30 radially extend. Further, the head portion 20 comprises of a collar 21 which acts as a stop during insertion of the shaft 1 into a support respectively a housing 50. A pin 40 is preferably integrally provided at this collar 21, which prevents from a rotation of the shaft 1 after the assembly of the shaft 1. The pin 40 extends in axial direction of the shaft 1 in assembly direction from the collar 21.

The shaft portion 10 can be provided hollow for reducing the weight. Preferably the shaft 1 is integrally injection molded from a plastic material. At the end portion 12 of the shaft portion 10, which is opposed to the head portion 20, additional clips or fitting elements (not shown) may be provided. Such additional clips or fitting elements at the end portion 12 engage with a second wall (not shown) of the housing during assembly. Thereby the distance between the first wall of the housing (50) and the second wall (not shown) is fixed and the mechanical behavior and stability of the system is increased. Possible additional clips may have a shape which correspond to the shape of clips 30.

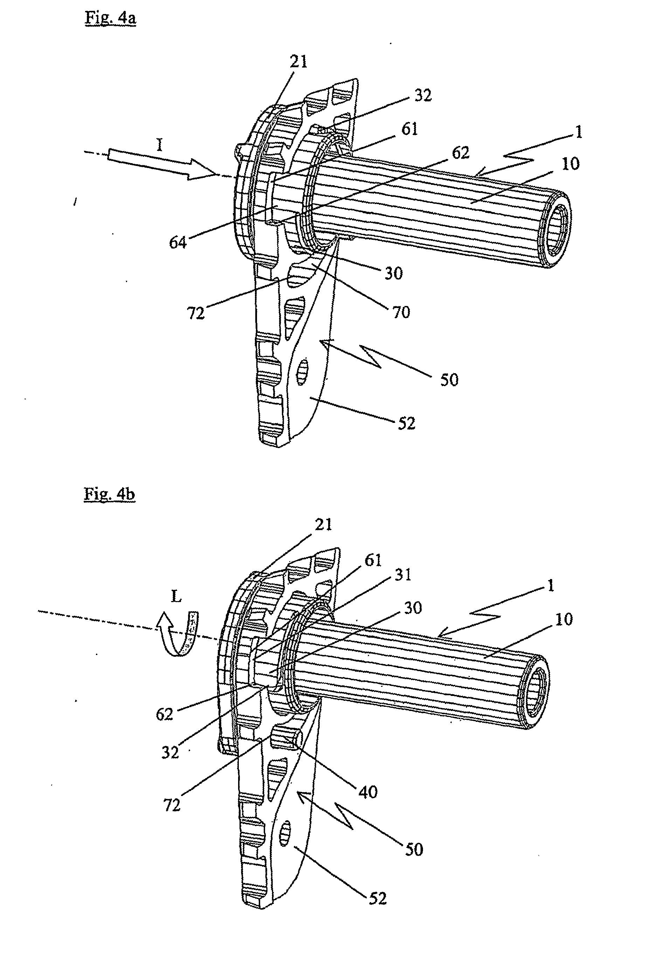

In Fig. 2 the head portion 20 of shaft 1 is shown in another viewing angle. Herein it can be seen, that the head portion 20 comprises at its front side a handle area 23 which is provided as a grip mould and which facilitates that the shaft 1 can manually be rotated during the assembly.

The embodiment of the handle area 23 as it is shown in Fig. 2 is only exemplary and may comprise an arbitrary form corresponding to its function. It is also possible and thinkable to provide tool sockets instead of the handle area 23 to facilitate an assembly of the shaft 1 with a tool or automatic facilities.

Fig. 2 further shows that two clips 30 are formed within the cup-shaped portion 22. In this embodiment the clips 30 are provided as resilient straps which radially extend from the cup-shaped portion 22 to the outside to fulfill the latching function like it is in more detail disclosed in the following. To this end, the clips 30 comprise an axial latching face 31 as well as a tangential latching face 32. It is to be noted, that the clips 30 are connected to the cup-shaped portion 22 at a connection line, which is axially oriented with respect to the shaft 1. So, the clips 30 radially extend to the outside in a tangentially fashion with respect to the cylindrical surface of the cup-shaped portion 22.

Fig. 3 shows a first wall of support respectively a housing 50. The support 50 is for example a part of a pedestal bearing of a pedal arrangement (not shown) or of a parking brake lever (not shown). The surface 51 is directed to the outside of the support 50, wherein the surface 52 (shown in figs. 4a and 4b) is directed to the interior of the support. A second wall (not shown) of the support 50 can be provided, which supports the end 12 of the shaft 1. Preferably, the support 50 is injection molded from a plastic material. It comprises a socket 60 into which the shaft 1 can be inserted. Further, a pin guidance 70 in form of a curved elongated hole is provided within the support 50. The pin guidance 70 is adjacently arranged to the socket 60 and its curvature has the same center of rotation than the socket 60. The pin guidance 70 comprises two ends, an assembly end 71 and an a locking end 72, the function of which will be explained in the following. The socket 60 is essentially cylindrically formed and comprises a diameter which is dimensioned so that the cup-shaped portion 22 of the shaft 1 can easily be inserted. The socket 60 comprises two radial recesses, as well as two latching windows 64. The radial recesses 63 increase the diameter of the cylindrical socket 60 by the amount which the clips 30 radially extend from the cup-shaped portion 22 to the outside. The recesses 63 are preferably axially curved, comprise a sickle shaped section and merge with the diameter of the socket 60.

Further, two latching windows 64 are inserted into the cylinder wall of socket 60, which are dimensioned so that the clips 30 can snap into the respective latching window 64.

The assembly of shaft 1 within the support 50 is shown in Figs. 4a and 4b. First, the shaft 1 is inserted into the support 50, as this is indicated by the arrow I. During the insertion the shaft 1 is oriented so that the pin 40 enters the pin guidance 70 at the assembly end 71. In this orientation the clips 30 are oriented with the recesses 63 of the socket 60. In this orientation the shaft 1 can be inserted into the support 50 in direction I without jamming or obstructing, until the collar 21 abuts the support 50. The shaft 1 is now inserted into the support 50 to its full extent.

Then the shaft 1 is preferably manually rotated, as this is indicated by the arrow L. In this embodiment the shaft must be rotated by about 90°. The shaft 1 is rotated so far, until the pin 40 abuts the locking end 72 of the pin guidance 70. In this orientation of the shaft 1 with respect to the support 50 the clips 30 radially snap to the outside into the corresponding latching windows 64 of the socket 60. The axial locking face 31 of the respective clip 30 latches with the axial stop face 61 of the locking window 64 and the tangential latching face 32 of the clip 30 latches with the tangential stop face 62 of the latching window 64, like this is indicated in Fig. 4b.

So, the shaft 1 is fixedly latched within the support 50. It can neither be rotated nor extracted in axial direction from the support 50. A disassembly is only possible, if the clips 30 are radially pushed to the inside and the latching with the support 50 is thereby released.

The shaft 1 and the support 50 are preferably made of injection molded plastic material. Preferably polyamide (PA6.6) or polypropylene (PP) is used. Also fiber reinforced materials, preferably glass fiber reinforced polypropylene can be used. For increased frictional properties the plastic material for shaft 1 or support 50 may comprise frictional additives like PTFE. Doing so, no additional lubricants like grease or oil are needed.

### List of reference signs:

- 1: shaft
- 10: shaft portion
- 12: end portion of shaft portion
- 20: head portion
- 21: collar
- 22: cup-shaped portion
- 23: handle area
- 30: clip
- 31: axial latching face
- 32: tangential latching face
- 40: pin
- 50: support respectively housing
- 51: outer surface of the support
- 52: interior surface of the support
- 60: socket
- 61: axial stop face
- 62: tangential stop face
- 63: recess
- 64: latching window
- 70: pin guidance
- 71: mounting end of the pin guidance
- 72: locking end of the pin guidance

## Claims

1. A self-locking shaft (1), comprising:
a. a shaft portion (10);
b. a head portion (20) for mounting of the shaft (1) at a support (50); wherein
c. the head portion (20) comprises a resilient clip (30), which latches with the support (50) during a rotational mounting motion of the shaft (1) with respect to the support (50),
d. wherein the clip (30) is provided as a resilient strap, which extends from a portion (22) of the head portion (20), and
e. wherein the clip (30) is connected to said portion (22) at one side of the clip (30) only,
**characterized in that**
f. said portion (22) of the head portion (20) is a cup-shaped portion (22) having a cylindrical surface, which is coaxially aligned with the shaft portion (10),
g. said cup-shaped portion (22) comprises at least two of said resilient clips (30),
h. said resilient clips radially extend to the outside in a tangentially fashion with respect to the cylindrical surface of the cup-shaped portion (22), and
i. the clips are connected to the cup-shaped portion (22) at a connection line, which is axially oriented with respect to the shaft (1).

2. Self-locking shaft according to claim 1, wherein the clips (30) comprise a rectangular shape and an axially curved radial top surface.

3. Self-locking shaft according to one of the claims 1 or 2, wherein the shaft (1) comprises a pin (40), which is connected to the head portion (20) in axial direction and which secures the shaft (1) after the assembly from undesired rotation.

4. Self-locking shaft according to one of the claims 1 - 3, wherein the shaft (1) comprises a handle area (23) at the head portion (20) for manual assembly of the shaft (1) in the support (50) without tools.

5. Self-locking shaft according to one of the claims 1 - 4, wherein the shaft (1) and all its components (10, 20, 30, 40) are integrally injection molded from a plastic material.

6. A structure (1, 50) comprising a support (50) fixedly latched with a self-locking shaft (1) according to one of the previous claims, the structure comprising:
a. an essentially cylindrically socket (60), which is integrated within the support (50); and
b. at least one latching window (64) for receiving one of said clips (30) during the latching of the shaft (1) with the support (50) by a rotation; wherein
c. the latching window (64) is radially introduced into the cylindrical wall of the socket (60).

7. Structure according to claim 6, whereby the support further comprises a pin guidance (70), which is provided as a curved elongated hole.

8. Structure according to one of the claims 6 or 7, wherein the socket (60) further comprises at least one axially curved recess (63) for receiving a clip (30) during the insertion of the shaft (1) into the support (50).

9. Pedal system, particularly for automotive engineering, comprising a structure (1, 50) according to one of the previous claims 6 to 8.

10. Parking brake lever system, particularly for automotive engineering, comprising a structure (1, 50) according to one of the previous claims 6 to 8.

11. Method for the assembly of a structure (1, 50) according to one of the previous claims 6 to 8, comprising the following steps in the following sequence:
a. Inserting the shaft (1) in axial direction (I) into a corresponding socket (60) within the support (50);
b. Rotating the shaft (1) around its rotational axis, until clips (30), which extend radially from the shaft (1), snap into the latching window (64) within the socket (60).

12. Method according to claim 11, wherein the rotation of the shaft (1) is performed around an angle of less or equal 180°.

13. Method according to claim 11, wherein the rotation of the shaft (1) is performed around an angle of less or equal 90°.

## Patentansprüche

1. Eine selbstverriegelnde Achse (1), aufweisend:
a. einen Achsbereich (10);
b. einen Kopfbereich (20) zur Befestigung der Achse (1) an einer Halterung (50); wobei
c. der Kopfbereich (20) einen federnden Klips (30) aufweist, der durch eine in Bezug auf die Halterung (50) rotierende Montagebewegung der Achse (1) mit der Halterung (50) verrastet und
d. wobei der Klips (30) als eine federnde Lasche bereitgestellt wird, welche sich von einem Teilbereich (22) des Kopfbereichs (20) aus erstreckt, und
e. wobei der Klip (30) mit dem Teilbereich (22) nur an einer Seite des Klipses (30) verbunden ist,
**dadurch gekennzeichnet, dass**
f. der Teilbereich (22) des Kopfteils (20) ein becherförmiger Teilbereich (22) ist, welcher eine zylindrische Oberfläche hat, die koaxial mit dem Achsbereich (10) ausgerichtet ist.
g. der becherförmige Teilbereich (22) mindestens zwei der federnden Klipse (30) aufweist,
h. die federnden Klipse radial nach außen abstehen, wobei sie tangential bezüglich der zylindrischen Oberfläche des becherförmigen Teilbereichs (22) sind und
i. die Klipse mit dem becherförmigen Teilbereich (22) an einer Verbindungslinie verbunden sind, die bezüglich der Achse (1) axial orientiert ist.

2. Selbstverriegelnde Achse gemäß Anspruch 1, wobei die Klipse (30) eine rechteckige Form und eine axial gekrümmte radiale obere Fläche aufweisen.

3. Selbstverriegelnde Achse gemäß einem der Ansprüche 1 oder 2, wobei die Achse (1) einen Stift (40) aufweist, der in axialer Richtung an dem Kopfbereich (20) angebracht ist und nach der Montage die Achse (1) vor ungewollter Verdrehung sichert.

4. Selbstverriegelnde Achse gemäß einem der Ansprüche 1 - 3, wobei die Achse (1) eine Griffbereich (23) am Kopfbereich (20) aufweist zur manuellen Montage der Achse (1) in der Halterung (50) ohne Werkzeuge.

5. Selbstverriegelnde Achse gemäß einem der Ansprüche 1 - 4, wobei die Achse (1) und alle ihre Komponenten (10, 20, 30, 40) in einem Stück aus einem Kunststoffinaterial spritzgegossen sind.

6. Eine Struktur (1, 50), aufweisend eine Halterung (50), welche fest mit einer selbstverriegelnden Achse (1) gemäß einem der vorhergehenden Ansprüche verriegelt ist, wobei die Struktur aufweist:
a. eine im wesentlichen zylindrische Aufnahme (60), die in der Halterung (50) integriert ist; und
b. mindestens ein Verriegelungsfenster (64), zur Aufnahme eines der Klipse (30) beim Verriegeln der Achse (1) mit der Halterung (50) durch eine Drehbewegung; wobei
c. das Verriegelungsfenster (64) radial in die Zylinderwand der Aufnahme (60) eingebracht ist.

7. Struktur gemäß Anspruch 6, wobei die Struktur weiterhin eine Stiftführung (70) aufweist, welche als gebogenes Langloch ausgeführt ist.

8. Struktur gemäß einem der Ansprüche 6 oder 7, wobei die Aufnahme (60) weiterhin mindestens einen axial gekrümmten Einschnitt (63) zur Aufnahme eines Klipses (30) beim Einführen der Achse (1) in die Halterung (50) aufweist.

9. Pedalsystem, vorzugsweise für den Automobilbau, aufweisend eine Struktur (1, 50) gemäß einem der vorhergehenden Ansprüche 6 bis 8.

10. Feststellbremshebelsystem, vorzugsweise für den Automobilbau, aufweisend eine Struktur (1, 50) gemäß einem der vorhergehenden Ansprüche 6 bis 8.

11. Verfahren zur Montage einer Struktur (1, 50) gemäß einem der vorhergehenden Ansprüche 6 bis 8, die folgenden Schritte in der folgenden Reihenfolge aufweisend:
a. Einführen der Achse (1) in axialer Richtung (I) in eine entsprechende Aufnahme (60) in der Halterung (50);
b. Drehen der Achse (1) um ihre Rotationsachse, bis radial von der Achse (1) abstehende Klipse (30) in das Verrieglungsfenster (64) in der Aufnahme (60) einschnappen.

12. Verfahren nach Anspruch 11, wobei das Drehen der Achse (1) um einen Winkel von kleiner oder gleich 180° erfolgt.

13. Verfahren nach Anspruch 11, wobei das Drehen der Achse (1) um einen Winkel von kleiner oder gleich 90° erfolgt.

## Revendications

1. Arbre à verrouillage automatique (1) comprenant :
a. une partie d'arbre (10) ;
b. une partie de tête (20) pour le montage de l'arbre (1) sur un support (50) ; dans lequel :
c. la partie de tête (20) comprend une griffe de serrage élastique (30), qui se verrouille avec le support (50) pendant un mouvement de montage rotationnel de l'arbre (1) par rapport au support (50),
d. dans lequel la griffe de serrage (30) est prévue comme une bague élastique, qui s'étend à partir d'une partie (22) de la partie de tête (20), et
e. dans lequel la griffe de serrage (30) est raccordée à ladite partie (22) au niveau d'un côté de la griffe de serrage (30) uniquement,
**caractérisé en ce que** :
f. ladite partie (22) de la partie de tête (20) est une partie en forme de coupe (22) ayant une surface cylindrique, qui est alignée de manière coaxiale avec la partie d'arbre (10),
g. ladite partie en forme de coupe (22) comprend au moins deux desdites griffes de serrage élastiques (30),
h. lesdites griffes de serrage élastiques s'étendent radialement vers l'extérieur de manière tangentielle par rapport à la surface cylindrique de la partie en forme de coupe (22), et
i. les griffes de serrage sont raccordées à la partie en forme de coupe (22) au niveau d'une ligne de raccordement, qui est orientée de manière axiale par rapport à l'arbre (1).

2. Arbre à verrouillage automatique selon la revendication 1, dans lequel les griffes de serrage (30) comprennent une forme rectangulaire et une surface supérieure radiale incurvée de manière axiale.

3. Arbre à verrouillage automatique selon l'une quelconque des revendications 1 ou 2, dans lequel l'arbre (1) comprend une broche (40), qui est raccordée à la partie de tête (20) dans la direction axiale, et qui garantit l'arbre (1) après l'assemblage, d'une rotation non souhaitée.

4. Arbre à verrouillage automatique selon l'une quelconque des revendications 1 à 3, dans lequel l'arbre (1) comprend une région de poignée (23) sur la partie de tête (20) pour l'assemblage manuel de l'arbre (1) dans le support (50), sans outils.

5. Arbre à verrouillage automatique selon l'une quelconque des revendications 1 à 4, dans lequel l'arbre (1) et tous ses composants (10, 20, 30, 40) sont moulés par injection de manière solidaire à partir d'une matière plastique.

6. Structure (1, 50) comprenant un support (50) verrouillé de manière fixe avec un arbre à verrouillage automatique (1) selon l'une quelconque des revendications précédentes, la structure comprenant :
a. une douille (60) essentiellement cylindrique, qui est intégrée à l'intérieur du support (50) ; et
b. au moins une fenêtre de verrouillage (64) pour recevoir l'une desdites griffes de serrage (30) pendant le verrouillage de l'arbre (1) avec le support (50) par une rotation ; dans laquelle :
c. la fenêtre de verrouillage (64) est introduite de manière radiale dans la paroi cylindrique de la douille (60).

7. Structure selon la revendication 6, moyennant quoi le support comprend en outre un guide (70) de broche, qui est prévu comme un trou allongé incurvé.

8. Structure selon l'une quelconque des revendications 6 ou 7, dans laquelle, la douille (60) comprend en outre au moins un enfoncement (63) incurvé de manière axiale pour recevoir une griffe de serrage (30) pendant l'insertion de l'arbre (1) dans le support (50).

9. Système de pédale, en particulier pour l'ingénierie automobile, comprenant une structure (1, 50) selon l'une des revendications précédentes 6 à 8.

10. Système de levier de frein à main, en particulier pour l'ingénierie automobile, comprenant une structure (1, 50) selon l'une quelconque des revendications précédentes 6 à 8.

11. Procédé pour l'assemblage d'une structure (1, 50) selon l'une quelconque des revendications précédentes 6 à 8, comprenant les étapes suivantes dans la séquence suivante, consistant à :
a. insérer l'arbre (1) dans la direction axiale (I) dans une douille (60) correspondante à l'intérieur du support (50) ;
b. faire tourner l'arbre (1) autour de son axe de rotation, jusqu'à ce que les griffes de serrage (30), qui s'étendent radialement à partir de l'arbre (1), s'enclenchent dans la fenêtre de verrouillage (64) à l'intérieur de la douille (60).

12. Procédé selon la revendication 11, dans lequel la rotation de l'arbre (1) est réalisée à peu près à un angle inférieur ou égal à 180°.

13. Procédé selon la revendication 11, dans lequel la rotation de l'arbre (1) est réalisée à peu près à un angle inférieur ou égal à 90°.
